# EUROPEAN PATENT SPECIFICATION

(11) **EP 2 487 840 B1**
(45) Date of publication and mention of the grant of the patent: **21.10.2020**
(21) Application number: 12167415.4
(22) Date of filing: 02.05.2006
(51) Int. Cl.: H04L 12/28, H04W 36/00, H04L 29/06

(54) **USER EQUIPMENT AND METHOD FOR PERFORMING AN IMS SESSION**
BENUTZERGERÄT UND VERFAHREN ZUR DURCHFÜHRUNG EINER IMS-SITZUNG
ÉQUIPEMENT UTILISATEUR ET PROCÉDÉ POUR RÉALISER UNE SESSION IMS

(30) Priority: 30.04.2005 CN 200510066900
(43) Date of publication of application: 15.08.2012
(62) Divisional of application: 06732893.0
(73) Proprietor: Samsung Electronics Co., Ltd., Suwon-si, Gyeonggi-do, 443-742 (KR); Beijing Samsung Telecom R & D Center, Haidian District, Beijing 100081 (CN)
(72) Inventor: Sun, Chunying, 100081 Beijing Beijing (CN); Li, Xiaoqiang, 100081 Beijing Beijing (CN)
(74) Representative: Nederlandsch Octrooibureau

(56) References cited:
- US-A1- 2002 111 167
- 3GPP SA WG2: "Combining CS and IMS services; Stage 2; (Release 7), 3GPP TS 23.279 V1.1.0", INTERNET CITATION, 4 April 2005 (2005-04-04), XP002396178, Retrieved from the Internet: URL:http://www.3gpp.org/ftp/tsg_sa/WG2_Arc h/TSGS2_45_Beijing/Tdocs/S2-050939.zip [retrieved on 2006-08-24]

## Description

### BACKGROUND OF THE INVENTION

### 1. Field of the Invention

The present invention relates to the field of 3G mobile communication, especially to a a user equipment, UE, and method for performing an Internet Multimedia ub-system, IMS, session when a circuit switched, CS, domain call between the user equipment as a calling UE and a called UE is being established or after said CS domain call has been established.

### 2. Description of the Related Art

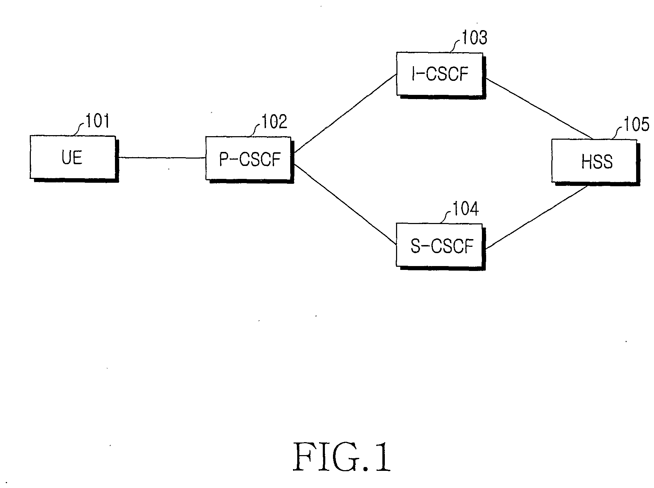

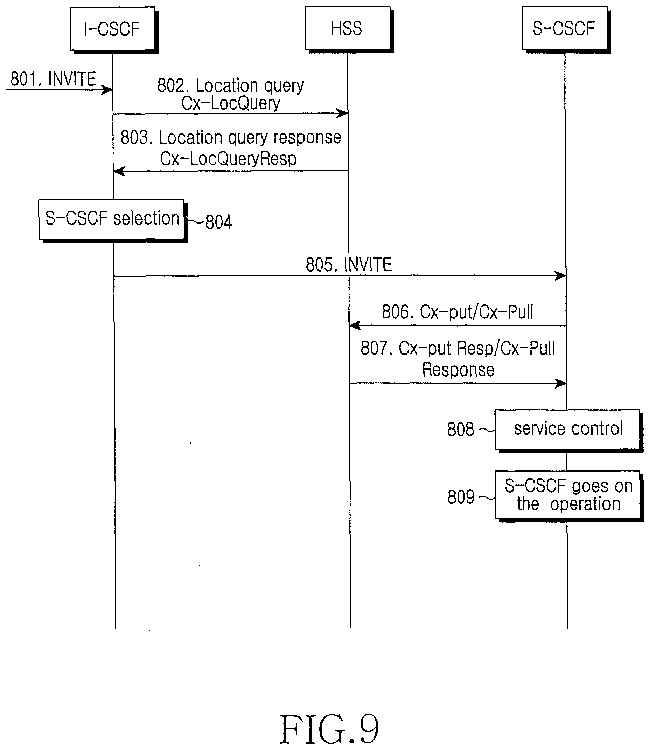

The Internet Multimedia Sub-system (hereinafter referred to as IMS), as shown in figure 1, is a structural framework established by 3GPP to provide subscribers with the IMS service. Before applying the IMS service, a subscriber(user equipment) 101 must register with a Service Call Session Control Function (hereinafter referred to as S-CSCF) 104 of the IMS, informing a S-CSCF subscriber of a binding relationship between a subscriber's Public User Identification (hereinafter referred to as PUI) and an IP address of the spot where the subscriber is. During the process of registration, the subscribers can also inform the network of their characteristics and the support ability and so on. For details, please refer to the criterion TS 23.228 of 3GPP. In figure 1, a Proxy Call Session Control Function (hereinafter referred to as P-CSCF) 102 serves as a proxy gateway for IMS accessing, which usually is a certain gateway of the network in which the subscriber currently locates. The address of the gateway is detected by the P-CSCF 102 and informed by the network when the subscriber is performing IP access. For more information to implement the operation, please refer to criterion TS23.228. By parsing a home network name included in the PUI of the subscriber 101, the P-CSCF 102 finds out an Inquiry Call Session Control Function (I-CSCF) 103, through which the P-CSCF 102 can interact with a Home network registration Subscriber Server (hereinafter referred to as HSS) 105 to find out the S-CSCF 104 that the subscriber 101 belongs to. After the I-CSCF 103 finds out the subscriber's S-CSCF 104, it forwards messages received from the P-CSCF 102 to the S-CSCF 104 to process them. If the S-CSCF 104 hasn't saved the subscriber's service attribute yet, it requests this information from the HSS 105. Some details on the interaction between the I-CSCF and the HSS and that between S-CSCF and HSS are illustrated in figure 9. The S-CSCF goes on processing messages received from the subscriber.

Figure 9 shows a process of registration state inquiry. In step 801, the I-CSCF receives an INVITE message, which is used to establish a first Session Initiation Protocol (hereinafter referred to as SIP) message initiated by an IMS call. The INVITE message includes the subscriber's SIP URI or TEL URI. Regardless which subscriber's PUI is included in this message, the I-CSCF is able to find out the subscriber's HSS according to available criteria. In HSS, information on some service characteristics and the like agreed between the subscriber and the operator is included. In addition, the information on whether the subscriber has registered with the IMS or not is included in the HSS. In step 802, the I-CSCF sends a Cx-LocQuery message to the HSS, including the subscriber's information on PUI and so on. In 803, the HSS returns the information on whether the subscriber has been registered or not, which is included in Cx-LocQueryResp message, If yes, it returns the selected S-CSCF information to the HSS. If the subscriber's S-CSCF information or the S-CSCF characteristic information for the subscriber is included in step 803, the I-CSCF selects a certain S-CSCF according to the characteristics of S-CSCF in step 804. In step 805, after the S-CSCF has been selected, the I-CSCF sends the received INVITE message to the S-CSCF. If the S-CSCF has no idea of the subscriber's service attributes, it requests this information from the HSS. In step 806, the S-CSCF sends a Cx-Pull message to the HSS, including the UE's PUI and so on. In step 807, the HSS returns the subscriber's service attributes to the S-CSCF. According to the subscriber's service attributes information obtained in the previous step, the S-CSCF conducts service control in step 808 and then performs corresponding service operation in step 809.

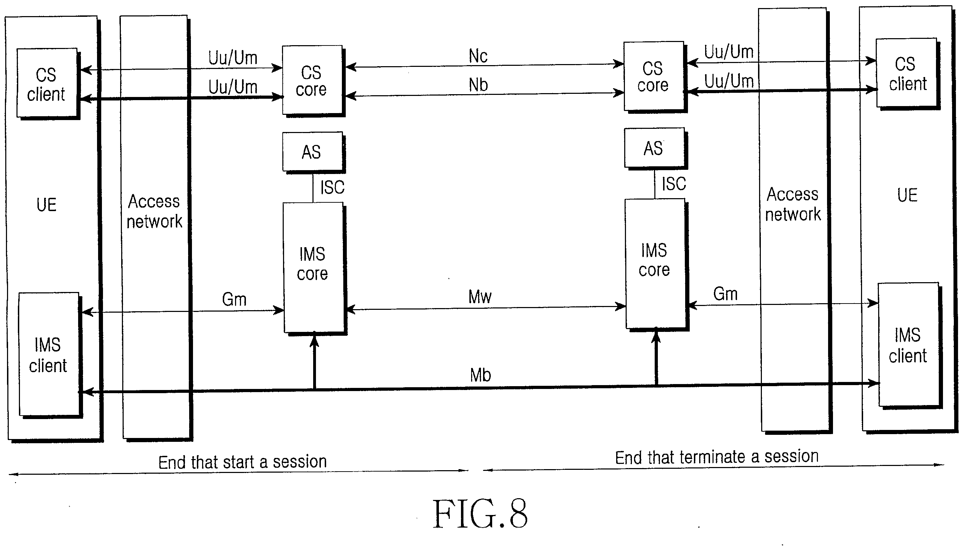

On the basis of the IMS, 3GPP is working on the establishment of a standard of Combinatorial Circuit Switching domain Call and IMS Session (hereinafter referred to as CSI), referred to figure 8 for more information.

Two CS and IMS clients are set in a User Equipment (UE), one for a Circuit Switching domain (hereinafter referred to as CS domain) call, and the other for a session of the IMS domain. When the CS domain call and the IMS domain session are conducted simultaneously between the same two UEs, then in the application layer of the UE, the same combinatorial service is presented to the subscriber by at least one Application Server(AS) connected the IMS domain. In this case, some interactions, operations, etc. between the CS domain and the IMS domain should be done.

In figure 8, the UEs access a CS domain core of the CS domain and an IMS domain core of the IMS domain through Access network corresponding to each of the UE. The CS domain core refers to the network entity related to the CS domain call. In general, it may include the Mobile terminal Switching Center (hereinafter referred to as MSC), Visit Location Register (hereinafter referred to as VLR), etc.. The IMS domain core refers to the network entity related to the IMS domain session. In general, it may include all entities in figure 1.

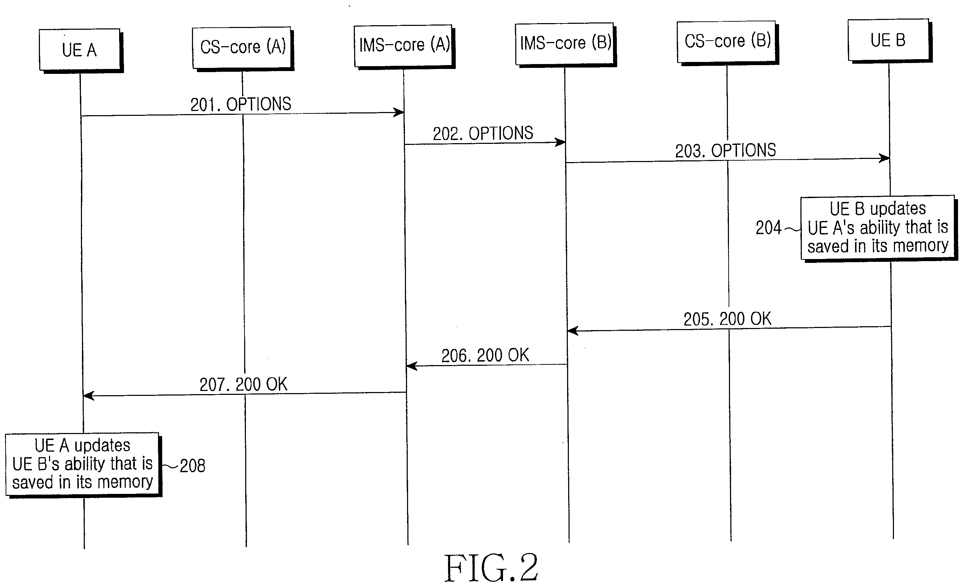

Before conducting CSI service between two UEs, they must be in advance informed of their abilities in CSI supporting. The ability in CSI supporting is transferred via an OPTIONS message. Figure 2 illustrates the process of transferring a terminal's CSI supporting ability between two subscribers through the OPTIONS message, which may include parameters such as UE A's MS-ISDN, SIP URI, the type of media bearer, whether the CSI is supported or not, and so on. Actually, in steps 201 to 203, UE A sends the OPTIONS message to UE B. The UE A is the mobile terminal currently used by the calling subscriber to initiate the call to the called subscriber; while UE B is the mobile terminal currently used by the called subscriber to receive the call from the calling subscriber. For details on these parameters, please refer to criterion 3GPP TS 23.279. Then in steps 205 to 207, the UE B sends the 200 OK message to the UE A, which includes the UE B's MS-ISDN, SIP URI, the type of media bearer, whether the CSI is supported or not, and so on. In this way, the UE A knows about UE B's terminal ability, and vice versa. In other words, in step 204 UE B updates UE A's ability that is saved in UE B's memory, and in step 208 UE A updates UE B's ability this is saved in UE A's memory. The terminal ability of the counterpart is saved in the terminal of the UE and is monitored and controlled by a certain timer. If timeout happens to the timer, it begins to exchange a new process of terminal ability. In addition the terminal ability of the counterpart saved in the flash memory will be overwritten by a new one.

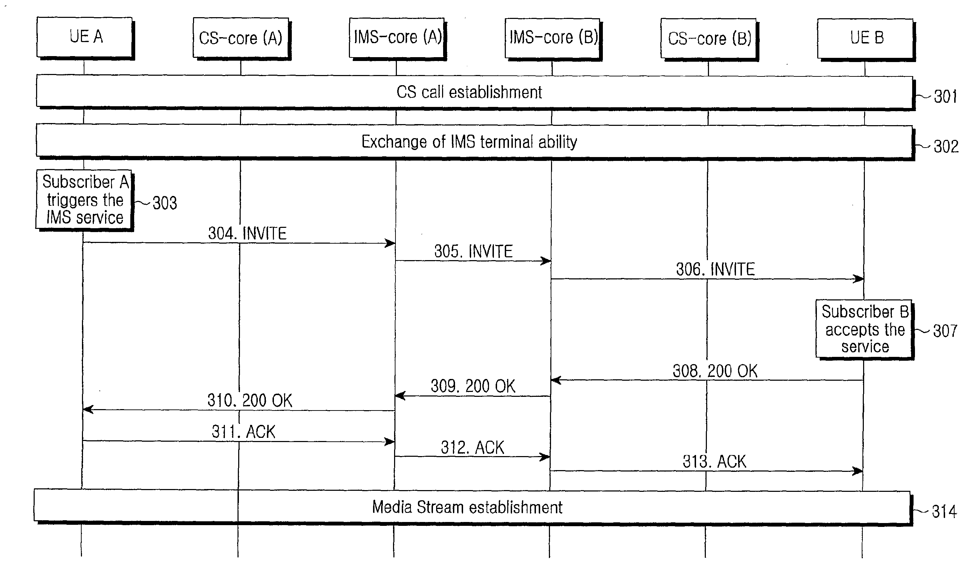

If terminal ability of the counterpart is not saved in the UE A, the Circuit Switching domain call is initiated by the UE A between the UE A and the UE B. As shown in figure 3, in step 301, a CS domain call is conventionally established between a subscriber A and a subscriber B, and the communication is performed. In order to conduct the CSI subsequently, the process of terminal ability exchanging is performed between the subscriber A and the subscriber B. In step 302 in figure 3, all steps in figure 2 are summed up. When the OPTIONS message is sent by the subscriber A to its S-CSCF, the message may include the information on the UE B's TEL URI as well as the subscriber A's terminal ability information. After this message is transferred from the UE A's S-CSCF to the IMS core B of the called UE B, the subscriber that has not registered with the IMS is detected, i.e., the IMS core B has no idea of the subscriber's current IP address. Therefore no communication can be done between the UE A and the UE B. Similarly, if the UE A knows the UE B's terminal ability, but the IMS core B detects that the subscriber has not registered with the IMS when the IMS session is being established in steps 303 ∼ 314, i.e., the IMS core B has no idea of the subscriber's current IP address, no communication can be done between the UE A and the UE B either.

The United States published patent application US 2002 / 111 167 A1 discloses a system and method of providing voice and data feature interaction in a Time Division Multiple Access (TDMA) radio telecommunication network having a data network overlay. An incoming voice call is established with a called mobile station (MS) when the called MS is operating in a data mode. An indicator is set in the called MS's user profile indicating that the called MS is operating in the data mode. The called MS is notified through the data network overlay that the incoming voice call is waiting. If the call is accepted, it is delivered to the called MS.

3rd Generation Partnership Project Technical Specification 3GPP TS 23.279 V1.1.0 (2005-04) provides architectural details to combine CS and IMS services for using them in parallel between the same two users. Said document provides a detailed description of how capabilities and identities are exchanged to enable the combination of CS and IMS services between the same two users.

### SUMMARY OF THE INVENTION

According to a first aspect of the present invention, a user equipment as defined by independent claim 1 is provided. According to a second aspect of the present invention, a user equipment as defined by independent claim 2 is provided. According to a third aspect of the present invention, a method as defined by independent claim 3 is provided. According to a fourth aspect of the invention, a method as defined by independent claim 4 is provided.

### BRIEF DESCRIPTION OF THE DRAWINGS

Figure 1 shows a block diagram of architecture of an IMS;
Figure 2 illustrates a process that a UE exchanges terminal ability in virtue of an OPTIONS message;
Figure 3 shows that an IMS session is added between two UEs based in a CS domain call;
Figure 4 shows a structure according to an example useful for understanding the present invention but not covered by the claims;
Figure 5 illustrates a process of initiating an IMS registration request with a call control message when "OPTIONS" is being transferred;
Figure 6 illustrates a process of initiating an IMS registration request with a call control message when "INVITE" is being transferred;
Figure 7 illustrates a process of initiating an IMS registration request with a call control message when the call is being established;
Figure 8 shows a block diagram of CSI architecture;
Figure 9 illustrates a process of detecting IMS registration state.
Figure 10 illustrates the operation of the UE according to an embodiment.

### DETAILED DESCRIPTION OF THE PREFERRED EMBODIMENTS

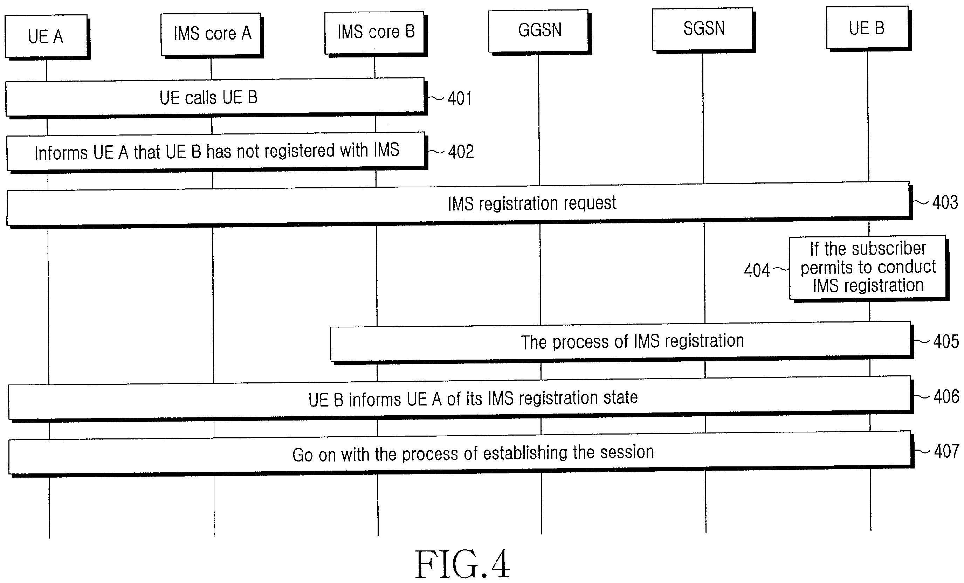

Figure 4 shows a structure according to an example useful for understanding the present invention but not covered by the claims. In step 401, by using a UE

A, a calling subscriber initiates an IMS domain session or sends an IMS relevant signaling to a UE B owned by a called subscriber. If the network detects that the called subscriber has not been registered to the IMS, it informs this information to the UE A in step 402 and then the UE A sends an IMS registration request to the called subscriber's UE B in step 403. In step 404, the UE B negotiates with the called subscriber and if the called subscriber determines to conduct the IMS registration, the UE B performs the process of IMS registration in step 405. In step 406, after the registration procedure completes, the UE B informs the UE A of the information on IMS registration state and this step is optional in the present invention. In step 407, then the UE A or an IMS core B restarts a new session or goes on the original call.

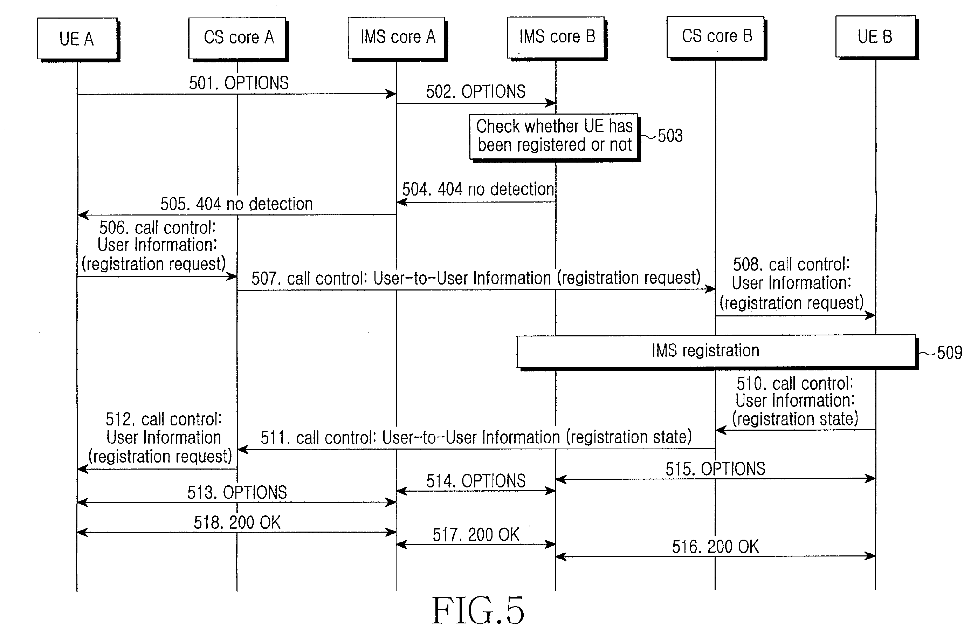

Figure 5 shows another example useful for understanding the present invention but not covered by the claims.

After a CS domain call is established between the UE A and the UE B, it is necessary for the UE A to exchange the terminal ability with the UE B and in step 501, the UE A sends an OPTIONS message to its IMS core A, including parameters such as the UE B's SIP URI, the UE A's MSISDN, SIP URI, the type of media bearer, whether the CSI is supported or not, and so on. After the UE A's IMS core A receives and processes this message, it finds out the UE B's IMS core entity which will be an Inquiry CSCF (hereinafter referred to as I-CSCF) in general according to the IMS's routing addressing mode, sends the OPTIONS message to the UE B's IMS core so as to change a routing address in the original message while keeping UE A's terminal ability unchanged in step 502. In step 503, after the UE B's IMS core receives this OPTIONS message, it checks whether this UE has registered with the IMS or not. More detailed explanations can be given to this process when referring to figure 9. Once the IMS core B finds out that this UE does not conduct the IMS registration, it returns an undetected message 404 to the UE in step 504. This message is routed from the IMS cores A to the UE A in step 505. After the UE A receives this message and finds out that the UE B has not registered, it initiates a request to ask the UE B to perform IMS registration. In step 506, the UE A sends a call control message "USER INFORMATION" to a CS core entity (usually the MSC). This message can either be an old call control message, or a new one. In this example, a "USER INFORMATION" message including an IMS registration request information element and other information regulated by available criteria is used. In step 507, the CS core A translates the "USER INFORMATION" message to USR (User-to-User Information) and sends it to the UE B's CS core. In step 508, the UE B's CS core forwards this message to the UE B and after the UE B receives this message, it finds out the IMS registration request information is included in this message. In step 509, if the UE B permits its subscriber to perform IMS registration process, the registration will be carried out between the UE B and the UE B's IMS core entity. For detailed description on this process, please refer to 3GPP TS 24.228. After the UE B succeeds in its IMS registration, the UE B either initiates the "OPTIONS" message to exchange terminal ability with the UE A or informs UE A of its IMS registration state. In step 515, in the former case, the UE B sends the "OPTIONS" message to IMS core B and the "OPTIONS" message is forwarded by the UE B's IMS core B and the UE A's IMS core A in step 514 and finally reaches the UE A in step 513. The UE A may include its terminal ability in a "200 OK" message (which is an acknowledgement message to the "OPTIONS") in step 518, the message is forwarded by the UE A's IMS core A and UE B's IMS core B and finally reaches UE B in steps 517 and 516, and thus the process of terminal ability exchanging has completed. If it is necessary for the UE B to inform the UE A of its IMS registration information, the UE B sends the "USER INFORMATION" message to the CS core B in step 510, which in turn forwards this message to the CS core A in virtue of the USR (USER-to-USER INFORMATION) message (step 511). Then the CS core A forwards the "USER INFORMATION" message to the UE A (step 512). This message may include the UE B's IMS registration state information: whether the registration succeeds or fails.

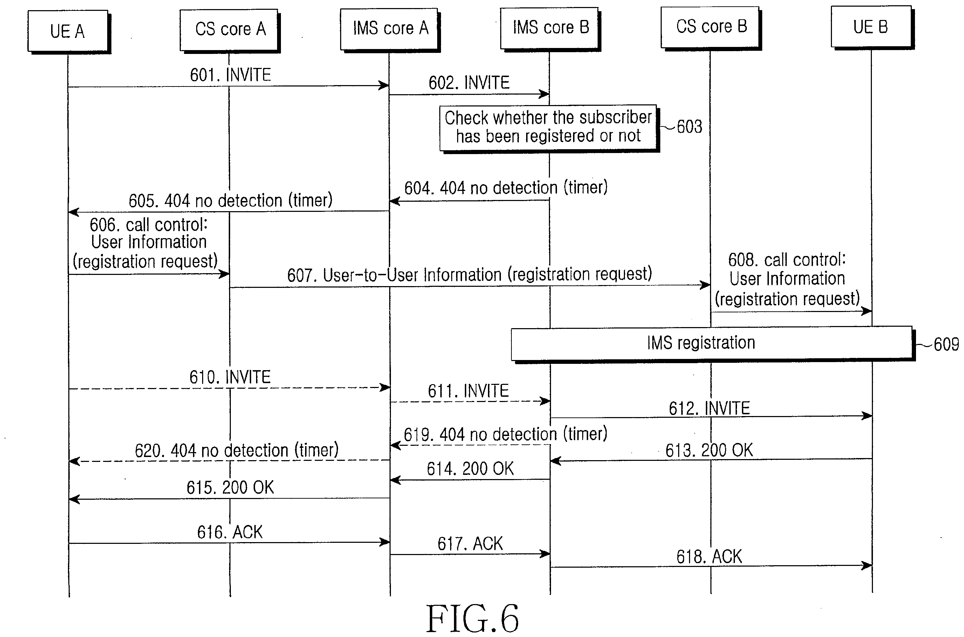

Figure 6 describes another example useful for understanding the present invention but not covered by the claims.

A CS domain call has already been established between the UE A and the UE B. In this case, the UE B's terminal ability has been well saved in the UE A. Therefore, once the UE A wants to have an addition of new IMS session, it sends an "INVITE" message to the IMS core A (step 601), which in turn forwards this message to the IMS core B after processes such as routing addressing and so on is performed (step 602). With the method illustrated in figure 9, the IMS core B may check whether the UE B has performed any IMS registration or not (step 603). In this example, it is assumed that the UE B has not registered with IMS. The IMS core B sends a message(404 no detection message) that no IMS registration has been detected to the IMS core B in step 604. This message also includes a time length of a timer. The timer indicates that once timeout happens, the UE A will re-initiates the IMS call, i.e., the "INVITE" message shown in step 610 in figure 6. If no timer is included in the message, no IMS call will be initiated by the UE A to the network and the rest part of the call process will be done by the network. After the UE A receives 404the message that no IMS registration has been detected (step 605), it may request the UE B to carry out the operation of IMS registration, and send the "USER INFORMATION" message to the CS core A (step 606), including the information element of IMS registration request. The CS core A encapsulates this message in the form of USR message and sends it to the CS core B (step 607) and the USR message also includes the information element of IMS registration request. The CS core B re-encapsulates the content of this message and sends it in the form of the USER INFORMATION message to the UE B (step 608). This message may include the information element of IMS registration request. After the UE B receives this "USER INFORMATION" message, and finds out that the calling subscriber requests UE B to register with the IMS and the UE B negotiates with its subscriber. If the subscriber permits it to conduct IMS registration, the IMS registration will be carried out between the UE B and the IMS core B (step 609). This registration process is not the essential of the present invention and 3GPP TS 24.228 will be referred to for details. After the IMS core B finds out that the UE B has succeeded in its registration, if no timer (steps 604 and 605) is included in the message (which is sent from the IMS core B to the UE A 404) that no IMS registration has been detected, it is necessary for the IMS core B to send the "INVITE" message to the UE B (step 612) and to continue the process of establishing the IMS session initiated by the UE A. In step 610, otherwise, the UE A sends the "INVITE" message to the IMS core B again once timeout happens to the UE A. After the IMS core B receives this "INVITE" message (step 611), it forwards it to the UE B (step 612) to carry out the calling process. The UE B accepts this call by feeding back the "200 OK" message (from steps 613 to 615). After the UE A receives the feedback "200 OK" message, it sends ACK to UE B (from steps 616 to 618). Thus, the process of establishing the IMS session completes.

In this example, if the UE B does not want to perform the IMS registration, when the UE A initiates another call (steps 610 and 611), the UE A no longer requests an establishment of the IMS session even if the timer is not included in the received 404 message that no IMS registration has been detected (steps 619 and 620). On the other hand, once the IMS core B finds out that no registration has been done by the UE B within a certain period, it abandons this IMS session.

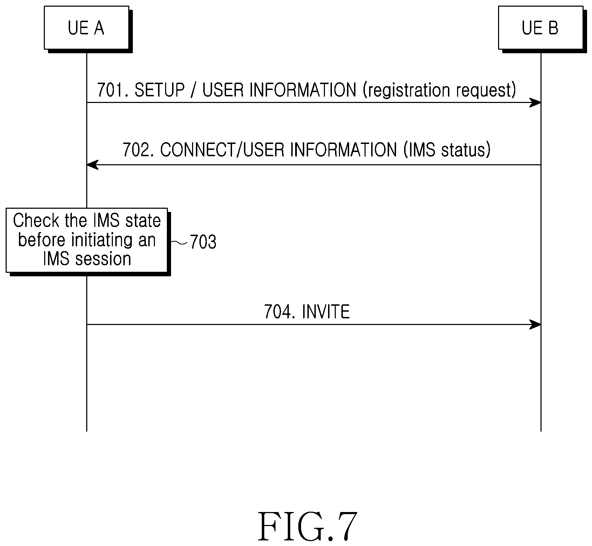

Figure 7 describes an embodiment of the present invention.

Actually, two cases are included in this embodiment. On the one hand, when a CS domain call is being established between the UE A and the UE B, a "SETUP" message sent from the UE A to the UE A's CS core may include IMS registration request (step 701). The UE A sending this IMS registration request means that the UE A has performed the IMS registration. Otherwise, no IMS registration request is included in the "SETUP" message. This message is forwarded to the UE B through the UE A's CS core and the UE B's CS core. Herein, a message transferred by the UE A's CS core and the UE B's core CS is named as IAM. After the UE B receives the IMS registration request, it negotiates with its subscriber whether to perform IMS registration or not. If necessary, the information that the UE B should perform IMS registration is indicated by an identifier included in the returned IMS state of a "CONNECT" message (step 702). The "CONNECT" message may also be an "ALERTING" one. In general, since the IMS registration does not begin yet when the message is being transmitted, the IMS registration state indicates nothing but that the UE B is willing to perform the IMS registration. This information is transferred to the UE A's CS domain network by a message ANM or ACM between networks, and finally to the UE A by "ALERTING" or "CONNECT". After the UE A receives the IMS state, it will reference to this information in its subsequent IMS calls or processes of terminal ability switching (step 703). Similarly, because the UE B has received the IMS registration request, it is aware that the UE A has been in the state of IMS registration. This information can be the reference for subsequent IMS call or the process of terminal ability switching. Only when the IMS registration processes have been performed by oneself and its counterpart, the IMS call or the process of terminal ability switching may be carried out (step 704) (as shown in figure 6 and figure 5).

On the other hand, when the UE A decides to exchange terminal ability with the UE B or to initiate an IMS session after the CS domain call has been already established between the UE A and the UE B, the UE A may check the UE B's IMS registration state after communicating with the UE B, or after it receives 404 message that no IMS registration has been detected, as shown in step 604 in figure 6 or in step 504 in figure 5. No matter which case is related to, the applied messages are just the same. The UE A sends the "USER INFORMATION" message to the CS core A to check its IMS registration state (step 701). Then the CS core A translates it into the USR (User-to-User Information) and sends it to the UE B's CS core. In addition, the CS core B translates the USR into the USER INFORMATION and sends it to the UE B. On the contrary, the UE B sends the IMS state to the UE A also in virtue of the USER INFORMATION.

In this embodiment, the parameter included in the CS message is allowed to be a non-IMS registration request and by the CS message that the UE A sends to the UE B to request it to perform the IMS registration, the UE A may inform the UE B of its inclination of the IMS registration. For example, if the UE A has performed the IMS registration or is going to perform IMS registration, the CS message sent to the UE B contains the UE A's state information on IMS registration, which indicates that the UE A has performed the IMS registration or is going to perform IMS registration. If the UE A does not want to perform the IMS registration, the state information on IMS registration included in the CS message indicates that the UE A would not perform the process of IMS registration. If the UE A is going to perform the process of IMS registration, this process may be done within a finite time period right after the message is transmitted or may be done before that the message is transmitted. After the UE B receives the state information on IMS registration included in the message, it saves this information and sends back a response message, such as the "ALERTING" or "CONNECT" message, informing the UE A of UE B's inclination of IMS registration. This information indicates that the UE B has performed the IMS registration or is going to perform the IMS registration, or would not conduct the process of IMS registration. If the UE B is going to conduct the process of IMS registration, this process may be done within a finite time period right after the message is transmitted or may be done before that the message is transmitted. In the case that the IMS registration processes have been done by both the UE A and the UE B, the IMS call or the process of terminal ability switching can be carried out (as shown in figure 6 and figure 5). If either of the two sides does not want to perform IMS registration, neither of them can initiate the IMS call or conduct the process of terminal ability switching.

If the information on the inclination of IMS registration is included in the CS control message (e.g., SETUP, ALERTING or CONNECT), the parameter that can take this information may be the information element User-User in these messages. The User-User protocol identifier in the User-User information element may be the state of IMS registration with "0" indicating that having the inclination of IMS registration, while "1"
indicating that having no inclination of IMS registration. Detailed encoding approaches can be different from each other.

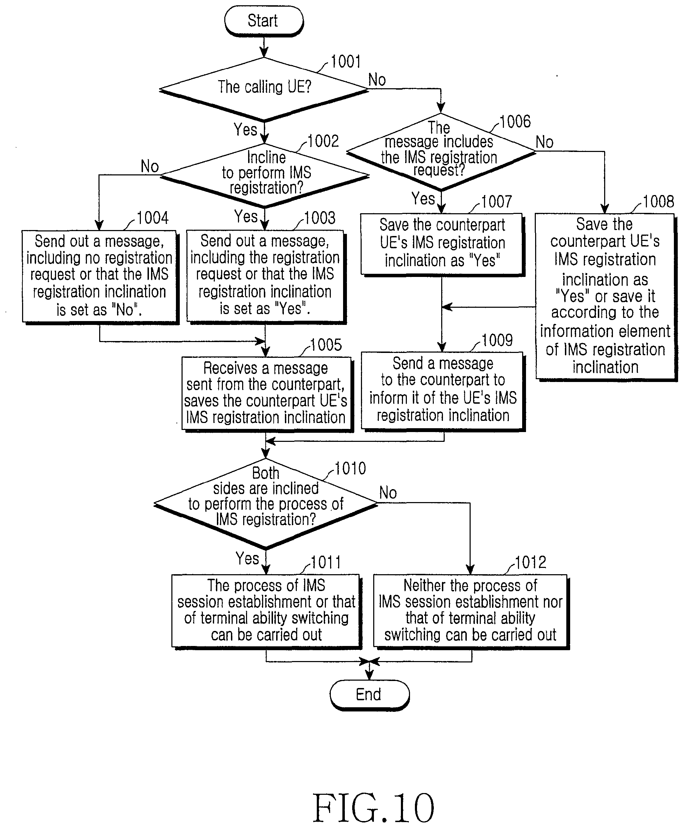

Figure 10 illustrates the operation of UE in the embodiment based on figure 7. First, in step 1001, it is determined whether this operation is performed by the calling subscriber or by the called subscriber. If by the calling subscriber, in step 1002, it is checked that if this user has been registered or it is willing to conduct the IMS registration. If yes, in step 1003, the message send by the calling to the called includes the registration request information element or the inclination of IMS registration is set as "Yes". Otherwise, in step 1004, the message send by the calling to the called contains no registration request information element or the inclination of IMS registration is set as "No". In step 1005, after the calling receives the message sent from the called, it saves the counterpart UE's inclination of IMS registration according to the information included in the message. If this is the operation performed by the called, in step 1006, whether the received message contain information element of the IMS registration request or not is checked. If yes, in step 1007, the counterpart UE's inclination of IMS registration is saved as "Yes". If the message contains no information element of IMS registration request or inclination, the counterpart UE's inclination of IMS registration is saved as "No". In step 1008, if the message contains the information element of IMS registration inclination, the counterpart UE's inclination of IMS registration is saved as "Yes". In step 1009, the called UE sends a message to the calling UE to inform it whether the called UE's IMS registration inclination is set as "Yes" or "No". No matter which side initiates the process of IMS session establishment or the process of terminal ability switching, it is necessary to judge whether both sides have the inclination of IMS registration or not in step 1010. If yes, in step 1011, the subsequent process of IMS session establishment or the process of terminal ability switching may be carried out; otherwise, in step 1012, neither the subsequent process of IMS session establishment nor the process of terminal ability switching can be carried out.

## Claims

1. A user equipment, UE, configured to perform an internet multimedia sub-system, IMS session in an IMS, when a circuit switched, CS, domain call is being established between the UE as a calling UE a called UE, the UE comprising:
means configured to request (506, 701) the called UE to conduct an IMS registration using a SETUP message including state information on the IMS registration of the calling UE (506); and
means configured to receive (512, 702), via a network from the called UE, an ALERTING message or a CONNECT message, the ALERTING or CONNECT message including state information on the IMS registration of the called UE, in response to the SETUP message; and
means configured to determine (703) whether to perform the IMS session and a process of terminal ability exchanging or not, according to whether or not the calling UE and the called UE prefer the IMS registration, based on the state information,
wherein the SETUP message and the ALERTING or CONNECT message are exchanged between the calling UE and the called UE through CS core entities associated with the calling and called UEs during CS call setup.

2. A user equipment, UE, configured to perform an internet multimedia sub-system, IMS session in an IMS, after a circuit switched, CS, domain call has been established between the UE as a calling UE and a called UE, the UE comprising:
means configured to request (506, 701) the called UE to conduct an IMS registration using a first USER INFORMATION message including state information on the IMS registration of the calling UE (506); and
means configured to receive (512, 702), via a network from the called UE, a second USER INFORMATION message including state information on the IMS registration of the called UE, in response to the first USER INFORMATION message; and
means configured to determine (703) whether to perform the IMS session and a process of terminal ability exchanging or not, according to whether or not the calling UE and the called UE prefer the IMS registration, based on the state information,
wherein the first and second USER INFORMATION messages are exchanged between the calling UE and the called UE through CS core entities associated with the calling and called UEs.

3. A method for performing an internet multimedia sub-system, IMS session in an IMS, when a circuit switched, CS, domain call is being established between a user equipment, UE, as a calling UE and a called UE, the method comprising:
requesting (506, 701) the called UE to conduct an IMS registration using a SETUP message including state information on the IMS registration of the calling UE;
receiving (512, 702), via a network from the called UE, a ALERTING message or a CONNECT message, the ALERTING or CONNECT message including state information on the IMS registration of the called UE, in response to the SETUP message; and
determining (703) whether to perform the IMS session and a process of terminal ability exchanging or not, according to whether or not the calling UE and the called UE prefer the IMS registration, based on the state information,
wherein the SETUP message and the ALERTING or CONNECT message are exchanged between the calling UE and the called UE through CS core entities associated with the calling and called UEs during CS call setup.

4. A method for performing an internet multimedia sub-system, IMS session in an IMS, after a circuit switched, CS, domain call has been established between a user equipment, UE, as a calling UE and a called UE, the method comprising:
requesting (506, 701) the called UE to conduct an IMS registration using a first USER INFORMATION message including state information on the IMS registration of the calling UE;
receiving (512, 702), via a network from the called UE, a second USER INFORMATION message including state information on the IMS registration of the called UE, in response to the first USER INFORMATION message; and
determining (703) whether to perform the IMS session and a process of terminal ability exchanging or not, according to whether or not the calling UE and the called UE prefer the IMS registration, based on the state information,
wherein the first and second USER INFORMATION messages are exchanged between the calling UE and the called UE through CS core entities associated with the calling and called UEs.

5. The UE according to claim 1 or the UE according to claim 2 or the method according to claim 3 or the method according claim 4, wherein the calling UE and the called UE perform the process of terminal ability exchanging according to the state information on the IMS registration.

6. The UE according to claim 1 or the UE according to claim 2 or the method according to claim 3 or the method according to claim 4, wherein the state information on the IMS registration of the calling UE and the called UE indicate that the calling UE and the called UE have been registered or are going to perform IMS registration, or would not perform any IMS registration.

7. The UE according to claim 1 or the UE according to claim 2 or the method according to claim 3 or the method according to claim 4, wherein if either the calling UE or the called UE does not prefer to perform IMS registration, neither of them can initiate an IMS session and the process of terminal ability exchanging.

## Patentansprüche

1. Benutzergerät, UE, das konfiguriert ist, um eine Internet-Multimedia-Subsystem(IMS)-Sitzung in einem IMS auszuführen, wenn ein leitungsvermittelter, CS, Domänenruf zwischen dem UE als einem anrufenden UE und einem angerufenen UE hergestellt wird, wobei das UE Folgendes umfasst:
Mittel, die konfiguriert sind, um das angerufene UE aufzufordern (506, 701), eine IMS-Registrierung unter Verwenden einer SETUP-Nachricht durchzuführen, die Zustandsinformationen über die IMS-Registrierung des anrufenden UE (506) enthält; und
Mittel, die konfiguriert sind, um über ein Netz von dem angerufenen UE eine ALERTING-Nachricht oder eine CONNECT-Nachricht zu empfangen (512, 702), wobei die ALERTING- oder CONNECT-Nachricht Zustandsinformationen über die IMS-Registrierung des angerufenen UE enthält, als Antwort auf die SETUP-Nachricht; und
Mittel, die konfiguriert sind, um zu bestimmen (703), ob die IMS-Sitzung und ein Verfahren zum Austauschen von Endgerätfähigkeiten ausgeführt werden oder nicht, je nachdem, ob das anrufende UE und das angerufene UE die IMS-Registrierung bevorzugen oder nicht, basierend auf den Zustandsinformationen,
wobei die SETUP-Nachricht und die ALERTING- oder CONNECT-Nachricht zwischen dem anrufenden UE und dem angerufenen UE durch CS-Kernentitäten ausgetauscht werden, die mit dem anrufenden und angerufenen UE während der CS-Ruf-Einrichtung assoziiert sind.

2. Benutzergerät, UE, das konfiguriert ist, um eine Internet-Multimedia-Subsystem(IMS)-Sitzung in einem IMS auszuführen, nachdem ein leitungsvermittelter, CS, Domänenruf zwischen dem UE als einem anrufenden UE und einem angerufenen UE hergestellt wurde, wobei das UE Folgendes umfasst:
Mittel, die konfiguriert sind, um das angerufene UE aufzufordern (506, 701), eine IMS-Registrierung unter Verwenden einer ersten BENUTZER-INFORMATIONS-Nachricht durchzuführen, die Zustandsinformationen über die IMS-Registrierung des anrufenden UE (506) enthält; und
Mittel, die konfiguriert sind, um über ein Netz von dem angerufenen UE eine zweite BENUTZER-INFORMATIONS-Nachricht zu empfangen (512, 702), die Zustandsinformationen über die IMS-Registrierung des angerufenen UE enthält, als Antwort auf die erste BENUTZER-INFORMATIONS-Nachricht; und
Mittel, die konfiguriert sind, um zu bestimmen (703), ob die IMS-Sitzung und ein Verfahren zum Austauschen von Endgerätfähigkeiten ausgeführt werden oder nicht, je nachdem, ob das anrufende UE und das angerufene UE die IMS-Registrierung bevorzugen oder nicht, basierend auf den Zustandsinformationen,
wobei die ersten und zweiten BENUTZER-INFORMATIONS-Nachrichten zwischen dem anrufenden UE und dem angerufenen UE durch CS-Kernentitäten ausgetauscht werden, die mit dem anrufenden und angerufenen UE assoziiert sind.

3. Verfahren zum Ausführen einer Internet-Multimedia-Subsystem(IMS)-Sitzung in einem IMS, wenn ein leitungsvermittelter, CS, Domänenruf zwischen einem Benutzergerät, UE, als ein anrufendes UE und einem angerufenen UE hergestellt wird, wobei das Verfahren Folgendes umfasst:
das angerufene UE Auffordern (506, 701), eine IMS-Registrierung unter Verwenden einer SETUP-Nachricht durchzuführen, die Zustandsinformationen über die IMS-Registrierung des anrufenden UE enthält;
Empfangen (512, 702) einer ALERTING-Nachricht oder einer CONNECT-Nachricht über ein Netz von dem angerufenen UE, wobei die ALERTING- oder CONNECT-Nachricht Zustandsinformationen über die IMS-Registrierung des angerufenen UE enthält, als Antwort auf die SETUP-Nachricht; und
Bestimmen (703), ob die IMS-Sitzung und ein Verfahren zum Austauschen von Endgerätfähigkeiten ausgeführt werden sollen oder nicht, je nachdem, ob das anrufende UE und das angerufene UE die IMS-Registrierung bevorzugen oder nicht, basierend auf den Zustandsinformationen,
wobei die SETUP-Nachricht und die ALERTING- oder CONNECT-Nachricht zwischen dem anrufenden UE und dem angerufenen UE durch CS-Kernentitäten ausgetauscht werden, die mit dem anrufenden und angerufenen UE während der CS-Ruf-Einrichtung assoziiert sind.

4. Verfahren zum Durchführen einer Internet-Multimedia-Subsystem(IMS)-Sitzung in einem IMS, nachdem ein leitungsvermittelter, CS, Domänenruf zwischen einem Benutzergerät, UE, als ein anrufendes UE und einem angerufenen UE hergestellt wurde, wobei das Verfahren Folgendes umfasst:
das angerufene UE Auffordern (506, 701), eine IMS-Registrierung unter Verwenden einer ersten BENUTZER-INFORMATIONS-Nachricht durchzuführen, die Zustandsinformationen über die IMS-Registrierung des anrufenden UE enthält;
Empfangen (512, 702) einer zweiten BENUTZER-INFORMATIONS-Nachricht über ein Netz von dem angerufenen UE, die Zustandsinformationen über die IMS-Registrierung des angerufenen UE enthält, als Antwort auf die erste BENUTZER-INFORMATIONS-Nachricht; und
Bestimmen (703), ob die IMS-Sitzung und ein Verfahren zum Austauschen von Endgerätfähigkeiten ausgeführt werden sollen oder nicht, je nachdem, ob das anrufende UE und das angerufene UE die IMS-Registrierung bevorzugen oder nicht, basierend auf den Zustandsinformationen,
wobei die ersten und zweiten BENUTZER-INFORMATIONS-Nachrichten zwischen dem anrufenden UE und dem angerufenen UE durch CS-Kernentitäten ausgetauscht werden, die mit dem anrufenden und angerufenen UE assoziiert sind.

5. UE nach Anspruch 1 oder UE nach Anspruch 2 oder Verfahren nach Anspruch 3 oder Verfahren nach Anspruch 4, wobei das anrufende UE und das angerufene UE das Verfahren zum Austauschen von Endgerätfähigkeiten gemäß den Zustandsinformationen über die IMS-Registrierung ausführen.

6. UE nach Anspruch 1 oder UE nach Anspruch 2 oder Verfahren nach Anspruch 3 oder Verfahren nach Anspruch 4, wobei die Zustandsinformationen über die IMS-Registrierung des anrufenden UE und des angerufenen UE anzeigen, dass das anrufende UE und das angerufene UE registriert wurden oder die IMS-Registrierung ausführen werden, oder keine IMS-Registrierung ausführen würden.

7. UE nach Anspruch 1 oder UE nach Anspruch 2 oder Verfahren nach Anspruch 3 oder Verfahren nach Anspruch 4, wobei, wenn entweder das anrufende UE oder das angerufene UE nicht vorzieht, die IMS-Registrierung auszuführen, keines von beiden die IMS-Sitzung und das Verfahren zum Austauschen von Endgerätfähigkeiten beginnen kann.

## Revendications

1. Équipement utilisateur UE, configuré pour exécuter une session sous-système multimédia Internet, IMS, dans un IMS, lorsqu'un appel de domaine à commutation de circuits, CS, est établi entre l'UE en tant qu'UE appelant et un UE appelé, l'UE comprenant :
des moyens configurés pour demander (506, 701) à l'UE appelé d'effectuer un enregistrement IMS en utilisant un message SETUP comprenant des informations d'état sur l'enregistrement IMS de l'UE appelant (506) ; et
des moyens configurés pour recevoir (512, 702), via un réseau de l'UE appelé, un message ALERTING ou un message CONNECT, le message ALERTING ou CONNECT comprenant des informations d'état sur l'enregistrement IMS de l'UE appelé, en réponse au message SETUP ; et
des moyens configurés pour déterminer (703) s'il faut effectuer la session IMS et un procédé d'échange de capacité de terminal ou non, selon que l'UE appelant et l'UE appelé préfèrent ou non l'enregistrement IMS, sur la base des informations d'état,
où le message SETUP et le message ALERTING ou CONNECT sont échangés entre l'UE appelant et l'UE appelé via des entités centrales CS associées aux UE appelants et appelés pendant l'établissement d'appel CS.

2. Équipement utilisateur UE, configuré pour exécuter une session sous-système multimédia Internet, IMS, dans un IMS, après qu'un appel de domaine à commutation de circuits, CS, a été établi entre l'UE en tant qu'UE appelant et un UE appelé, le UE comprenant :
des moyens configurés pour demander (506, 701) à l'UE appelé d'effectuer un enregistrement IMS en utilisant un premier message USER INFORMATION comprenant des informations d'état sur l'enregistrement IMS de l'UE appelant (506) ; et
des moyens configurés pour recevoir (512, 702), via un réseau de l'UE appelé, un deuxième message USER INFORMATION comprenant des informations d'état sur l'enregistrement IMS de l'UE appelé, en réponse au premier message USER INFORMATION ; et
des moyens configurés pour déterminer (703) s'il faut effectuer la session IMS et un processus d'échange de capacité de terminal ou non, selon que l'UE appelant et l'UE appelé préfèrent l'enregistrement IMS, sur la base des informations d'état,
où les premier et deuxième messages USER INFORMATION sont échangés entre l'UE appelant et l'UE appelé par l'intermédiaire d'entités centrales CS associées aux UE appelants et appelés.

3. Procédé permettant d'effectuer une session sous-système multimédia Internet, IMS, dans un IMS, lorsqu'un appel de domaine à commutation de circuits, CS, est établi entre un équipement utilisateur UE, en tant qu'UE appelant et UE appelé, le procédé comprenant :
la demande (506, 701) à l'UE appelé d'effectuer un enregistrement IMS en utilisant un message SETUP comprenant des informations d'état sur l'enregistrement IMS de l'UE appelant ;
la réception (512, 702), via un réseau de l'UE appelé, d'un message ALERTING ou d'un message CONNECT, le message ALERTING ou CONNECT comprenant des informations d'état sur l'enregistrement IMS de l'UE appelé, en réponse au message SETUP ; et
la détermination (703) s'il faut effectuer ou non la session IMS et un processus d'échange de capacité de terminal, selon que l'UE appelant et l'UE appelé préfèrent, ou non, l'enregistrement IMS, sur la base des informations d'état,
où le message SETUP et le message ALERTING ou CONNECT sont échangés entre l'UE appelant et l'UE appelé via des entités centrales CS associées aux UE appelants et appelés pendant l'établissement d'appel CS.

4. Procédé pour effectuer une session sous-système multimédia Internet, IMS, dans un IMS, après qu'un appel de domaine à commutation de circuits, CS, a été établi entre un équipement utilisateur UE, en tant qu'UE appelant et UE appelé, le procédé comprenant :
la demande (506, 701) à l'UE appelé d'effectuer un enregistrement IMS en utilisant un premier message USER INFORMATION comprenant des informations d'état sur l'enregistrement IMS de l'UE appelant ;
la réception (512, 702), via un réseau de l'UE appelé, d'un deuxième message USER INFORMATION comprenant des informations d'état sur l'enregistrement IMS de l'UE appelé, en réponse au premier message USER INFORMATION ; et
la détermination (703) s'il faut effectuer la session IMS et un processus d'échange de capacité de terminal ou non, selon que l'UE appelant et l'UE appelé préfèrent, ou non, l'enregistrement IMS, sur la base des informations d'état,
où les premier et deuxième messages USER INFORMATION sont échangés entre l'UE appelant et l'UE appelé par l'intermédiaire d'entités centrales CS associées aux UE appelants et appelés.

5. UE selon la revendication 1 ou UE selon la revendication 2 ou procédé selon la revendication 3 ou procédé selon la revendication 4, où l'UE appelant et l'UE appelé effectuent le processus d'échange de capacité de terminal selon les informations d'état sur l'enregistrement IMS.

6. UE selon la revendication 1 ou UE selon la revendication 2 ou procédé selon la revendication 3 ou procédé selon la revendication 4, où les informations d'état sur l'enregistrement IMS de l'UE appelant et de l'UE appelé indiquent que l'UE appelant et l'UE appelé ont été enregistrés ou vont effectuer l'enregistrement IMS, ou ne procéderaient à aucun enregistrement IMS.

7. UE selon la revendication 1 ou UE selon la revendication 2 ou procédé selon la revendication 3 ou procédé selon la revendication 4, où si ni l'UE appelant ni l'UE appelé ne marque sa préférence pour effectuer l'enregistrement IMS, aucun de ceux-ci ne pourra initier une session IMS ni le processus d'échange de capacité du terminal.
